# FASCICULE DE BREVET EUROPEEN

(11) **EP 3 699 120 B1**
(45) Date de publication et mention de la délivrance du brevet: **28.02.2024**
(21) Numéro de dépôt: 20020017.8
(22) Date de dépôt: 13.01.2020
(51) Int. Cl.: B65G 69/00, B60P 1/64, B60P 7/13

(54) **DISPOSITIF D'IMMOBILISATION ET SÉCURISATION D'UNE CAISSE MOBILE À BÉQUILLES, DE RÉCEPTION DE CHARGEMENT ET PROCÉDÉ DE MISE EN OEUVRE**
VORRICHTUNG ZUR IMMOBILISIERUNG UND SICHERUNG EINES WECHSELBEHÄLTERS MIT FÜSSCHEN FÜR DIE LASTAUFNAHME, UND ENTSPRECHENDES ANWENDUNGSVERFAHREN
DEVICE FOR IMMOBILISING AND SECURING A MOBILE UNIT WITH LOAD-RECEIVING STANDS AND METHOD FOR IMPLEMENTING SAME

(30) Priorité: 21.02.2019 FR 1901788
(43) Date de publication de la demande: 26.08.2020
(73) Titulaire: EXPRESSO France SAS, 67319 Wasselonne (FR)
(72) Inventeur: Roere, Michel, 67720 WEYERSHEIM (DE)
(74) Mandataire: Munier, Laurent

(56) Documents cités:
- EP-A1- 3 260 405
- DE-U1-202013 005 442
- FR-A1- 2 782 049
- US-A- 4 273 347

## Description

La présente invention concerne l'immobilisation et la sécurisation d'une caisse mobile.

Les caisses mobiles sont des caisses transportées par camion.

Pour le chargement, comme pour un camion, les caisses sont accostées au quai. Traditionnellement, les dessous de caisse présentent des traverses transversales. Les caisses mobiles placées à quai sont posées sur leurs béquilles latérales. En effet, ces caisses sont équipées de béquilles rétractables. Quand les caisses sont chargées sur camion, les béquilles sont repliées. Il sera rappelé que, mêmes béquilles sorties, le camion peut déplacer la caisse car il la soulève.

En position à quai, la caisse mobile donne au personnel une impression de stabilité car posée sur ses béquilles. Toutefois, les risques d'accident n'ont pas disparu ; par exemple, un camion peut heurter une béquille ou, autre exemple, le chargement ou les chariots élévateurs peuvent amener le poids en porte-à-faux.

Cela entraîne la chute de la caisse mobile et de tels accidents peuvent être graves, le personnel pouvant chuter et recevoir le chargement ou même le chariot élévateur en chute.

EP3260405A1 divulgue un dispositif selon le préambule de la revendication 1, et une méthode selon le préambule de la revendication 9.

Il est connu par le document EP 17000960.9 au nom de la demanderesse de maintenir les caisses mobiles à quai par un dispositif mobile et à vérin formant béquille. Ceci afin d'éviter les accidents. Le dispositif venant immobiliser le dessous de la caisse et le sécuriser.

Ce béquillage par le dessous au centre de la caisse empêche les chutes car la tête de la béquille mobile connue est venue fixer la caisse mobile en venant appuyer et bloquer une traverse transversale avec des ergots montés sur la tête connue de l'état de la technique.

Ainsi, la tête de dispositif d'immobilisation et sécurisation d'une caisse mobile déchargée du camion étant placée sur ledit dispositif d'immobilisation et sécurisation coulissant sous la caisse et venant immobiliser celle-ci par blocage du dessous de la caisse, ladite tête comprend une structure métallique supportant au moins un moyen de détection du dessous de la caisse et des moyens de blocage de ladite caisse.

Mais maintenant, il existe des modèles de caisse avec des traverses longitudinales et sans ou avec peu de traverses transversales, c'est-à-dire au moins partiellement dépourvus de ces traverses.

De plus, les caisses frigorifiques ne présentent sous le dessous de caisse ni traverses longitudinales, ni traverses transversales. Seuls les guides sont accessibles au niveau du dessous de caisse.

Les caisses mobiles étant transportées par camion présentent sur le dessous des guides coopérant avec le camion.

Les guides sont espacés de 600 mm, distance imposée par la norme. Le camion est centré par rapport aux guides pour prendre la caisse.

Le camion :
est centré,
se glisse sous la caisse,
lève la caisse,
éventuellement repliement et rangement manuel des béquilles.

Ainsi, le camion peut partir avec la caisse.

En position de chargement de marchandises, la caisse est placée à quai comme un camion.

Pour mettre la caisse à quai, le camion effectue les étapes inverses.

En premier lieu, l'invention se rapporte à un dispositif d'immobilisation et sécurisation d'une caisse mobile comprenant une tête, selon la revendication 1.

Pour résoudre le problème de bloquer et immobiliser une caisse mobile aussi bien avec traverses transversales que dépourvue ou partiellement dépourvue desdites traverses, la tête de dispositif selon l'invention comprend des moyens de blocages qui sont au moins deux bras latéraux s'écartant symétriquement de la structure métallique de la tête jusqu'à l'appui sur les guides de la caisse, chaque bras est équipé d'un patin d'appui anti-glissement sur le guide correspondant.

Ainsi, la tête de dispositif résout le problème technique selon l'invention.

Les têtes de blocage connues par l'état de la technique avaient pour but de toucher une traverse transversale ; ainsi, le moyen de détection pouvait présenter une très faible largeur, la traverse allant d'un côté à l'autre de la caisse. Puis, la caisse était verrouillée par immobilisation de la traverse.

Avec les caisses mobiles sans traverses, un tel système de détection ne fonctionne plus.

Dans le but de détecter la caisse en remplissant les demandes de l'invention, à savoir s'adapter à des caisses sans ou avec peu de traverses transversales ou bien avec des traverses longitudinales, la tête d'immobilisation doit trouver le centre longitudinal de ladite caisse.

Pour résoudre le problème technique de l'invention, la tête doit détecter la traverse longitudinale centrale.

Des plaques plus larges que celles connues par l'état de la technique permettent cette détection. Pour cette fonction, le moyen de détection de dessous de caisse mobile comprend une plaque d'au moins 90 mm de largeur afin de détecter le longeron longitudinal et central de la caisse.

Suivant une autre caractéristique : les patins de blocage sont en matière antidérapante. Cette caractéristique permet aux patins de fixer la caisse sans glisser.

Dans le but que la tête soit universelle et permette d'immobiliser et de sécuriser aussi bien les caisses mobiles avec traverses longitudinales que sans traverses longitudinales, la tête du dispositif d'immobilisation selon la présente invention comprend des moyens de blocage supplémentaires orientés vers le haut pour le blocage de longerons transversaux inférieurs, lesdits moyens de blocage supplémentaires étant escamotables pour appui sur le dessous de caisse. Les moyens de blocage orientés vers le haut sont des taquets escamotables.

Suivant d'autres caractéristiques :
afin que le serrage soit centré et équilibré, un vérin central actionne au moins deux biellettes symétriques écartant par rotation les deux bras latéraux ;
dans le but de diminuer le porte-à-faux et encore davantage le risque d'accident, les bras latéraux s'écartant de ladite tête sont situés sur le côté à l'avant de la tête;
pour renforcer la solidité du dispositif, la structure est en acier.

L'invention a encore pour objet un procédé d'immobilisation et sécurisation d'une caisse mobile à quai en position de chargement, selon la revendication 9, dans lequel est utilisée une tête de dispositif d'immobilisation et sécurisation conforme à la tête définie ci-dessus, ledit procédé comprenant les étapes suivantes :
la caisse chargée sur camion est centrée par ses guides ;
le camion s'approche du quai en marche arrière ;
en position de chargement de marchandises depuis le quai dans la caisse, le camion s'arrête ;
le personnel, typiquement le chauffeur, déploie et fixe les béquilles latérales de la caisse ;
le camion descend, la caisse est posée sur le sol via ses béquilles ;
le camion s'en va et laisse la caisse mobile.

Afin de pouvoir sécuriser tous les types de caisses mobiles connus, le procédé selon l'invention comprend les étapes suivantes :
le dispositif d'immobilisation et sécurisation avec la tête arrive sous la caisse mobile posée au sol ;
la tête monte jusqu'à ce que la plaque large et centrée touche le soubassement de caisse, ce qui déclenche la détection dite « caisse touchée » ;
la caisse étant dépourvue de longerons transversaux au moins partiellement, les bras latéraux sont actionnés et s'écartent de la tête jusqu'à venir appuyer et immobiliser les guides de la caisse, la caisse est immobilisée et sécurisée ;
les chariots élévateurs entrent et sortent de la caisse avec les marchandises.

Le départ de la caisse s'effectue par les opérations inverses de celles des étapes de son arrivée.

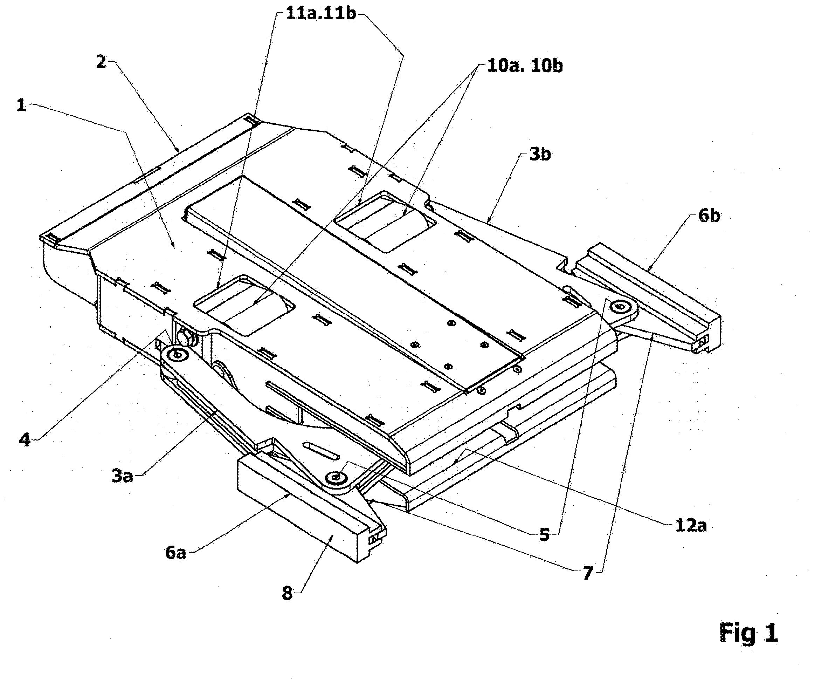

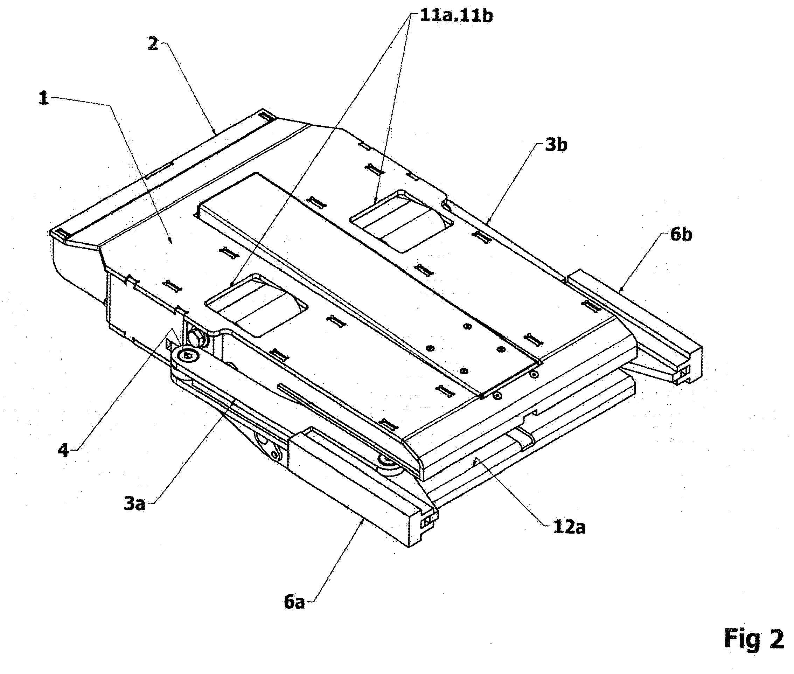

L'invention sera mieux comprise à la lecture des figures données à titre d'exemples non limitatifs et sur lesquelles :
la Fig. 1 représente la tête de dispositif selon l'invention vue en élévation de trois quarts dessus avec les bras latéraux en position de blocage ;
la Fig. 2 représente la tête de dispositif selon la Fig. 1 en position rangement, c'est-à-dire bras latéraux repliés ;
la Fig. 3 représente une caisse mobile standard, c'est-à-dire avec des traverses transversales disposées régulièrement sur le dessous de caisse et la position de la tête d'immobilisation qui sécurise ladite caisse vue de dessus ;
la Fig. 4 est une coupe verticale selon A-A de la caisse mobile et de la tête d'immobilisation selon la Fig. 3 ; le détail B représente, vue en coupe verticale, la tête d'immobilisation en position travail, les taquets de blocage verrouillant une traverse transversale selon la Fig.3 ;
la Fig. 5 représente, vue de dessus, la tête d'immobilisation sécurisant la caisse mobile selon les Fig. 3 et 4 par appui et verrouillage d'une traverse transversale par les taquets de blocage sortis vers le haut de la tête. cette dernière étant centrée par l'appui des bras latéraux sur les guides longitudinaux ;
la Fig. 6 représente, vue de dessus, une caisse mobile avec peu de traverses transversales plus une traverse centrale longitudinale et la position de la tête d'immobilisation qui sécurise ladite caisse ;
la Fig. 7 est une coupe verticale selon G-G de la caisse mobile et de la position de la tête d'immobilisation selon la Fig. 3 ; le détail F représente la tête d'immobilisation en position travail, les taquets de blocage relevés dans le vide sous ladite caisse ;
la Fig. 8 représente, vue de dessus, la tête d'immobilisation sécurisant la caisse mobile selon les Fig. 6 et 7 par appui et immobilisation des guides longitudinaux de ladite caisse mobile, bras latéraux sortis jusqu'à appui sur lesdits guides ;
la Fig. 9 représente une caisse mobile à panneau sandwich isolant, c'est-à-dire à faces lisses, typiquement de caisse frigorifique et la position de la tête d'immobilisation qui sécurise ladite caisse vue de dessus ;
la Fig. 10 est une coupe verticale vue selon H-H de la caisse mobile et de la tête d'immobilisation sur chariot ; le détail L représente, vue en coupe verticale, la tête d'immobilisation au contact du dessous de la caisse mobile selon la Fig. 9 ;
la Fig. 11 représente, vue en coupe verticale, la tête d'immobilisation au contact du dessous de la caisse mobile ;
la Fig. 12 représente la tête d'immobilisation selon l'invention en coupe horizontale;
La tête 1 de dispositif d'immobilisation représentée sur les Fig. 1 et 2 comprend une structure 2. Cette structure 2 est en acier. Deux bras latéraux 3a, 3b sont montés de chaque côté respectif vers l'avant de la tête 1. Ces bras latéraux 3a, 3b se présentent sensiblement sous forme de biellettes incurvées présentant un axe de rotation 4 lié à la structure 2. La rotation de cette extrémité du bras entraîne le déploiement de l'autre extrémité du bras 3a ou 3b latéralement à la structure 2. En d'autres termes, cette extrémité de bras 3a ou 3b s'écarte de la structure 2. Cette extrémité comprend elle aussi un axe 5 sur lequel est monté un patin de blocage 6a, 6b. Chaque patin de blocage 6a ou 6b comprend un support métallique 7 lié via l'axe 5 au bras 3a ou 3b et une partie d'appui 8. Cette partie d'appui 8 peut être en divers matériaux, notamment il a été expliqué que le caoutchouc est avantageux. Ainsi, quand le patin 6a ou 6b appuie sur une surface, celle-ci ne pourra plus glisser, donc se déplacer, par rapport au patin 6a, 6b. L'axe de rotation 5 permet de compenser la rotation du bras 3a ou 3b autour de l'axe 4. Cette compensation permet à la partie d'appui 8 de rester parallèle au bord de la structure 2 et de l'autre patin de blocage.

Sur le haut, la structure 2 présente une plaque de détection 9 dite « caisse touchée ». Cette plaque de détection 9 est large et centrée pour pouvoir être actionnée par tout type de soubassement de caisse mobile. Cette plaque 9 présente une largeur d'au moins 90 mm et est montée selon l'axe central de la structure 2. La plaque 9 pivote depuis sa partie avant liée à la structure 2. Il en résulte que sa partie arrière est soulevée. Le contact avec une surface au-dessus de la tête 1 telle que la surface d'un dessous de caisse mobile appuie sur la partie soulevée de la plaque 9, ce qui enclenche le dispositif de détection.

Le moyen de détection de dessous de caisse mobile (16) comprend la plaque (9) d'au moins 90 mm de largeur afin de détecter le longeron longitudinal et central de la caisse et les traverses transversales et les panneaux isolants des caisse frigorifiques (15.2).

Latéralement par rapport à la plaque 9, le haut de la structure présente des taquets de blocage 10a, 10 b placés rétractables dans des ouvertures 11a, 11b.

La structure 2 présente une rainure profonde 12 orientée vers l'avant. En pivotant autour de l'axe 4, l'avant des bras 3a, 3b entre ou sort de cette rainure 12.

La Fig. 2 diffère de la Fig. 1 en ce que les bras 3a, 3b sont repliés. Donc, la partie avant de ces bras 3a, 3b est entrée dans la rainure 12 de la structure 2. Les signes de référence des éléments identiques sont conservés d'une figure à l'autre. Les patins 6a, 6b sont parallèles au côté de la structure 2.

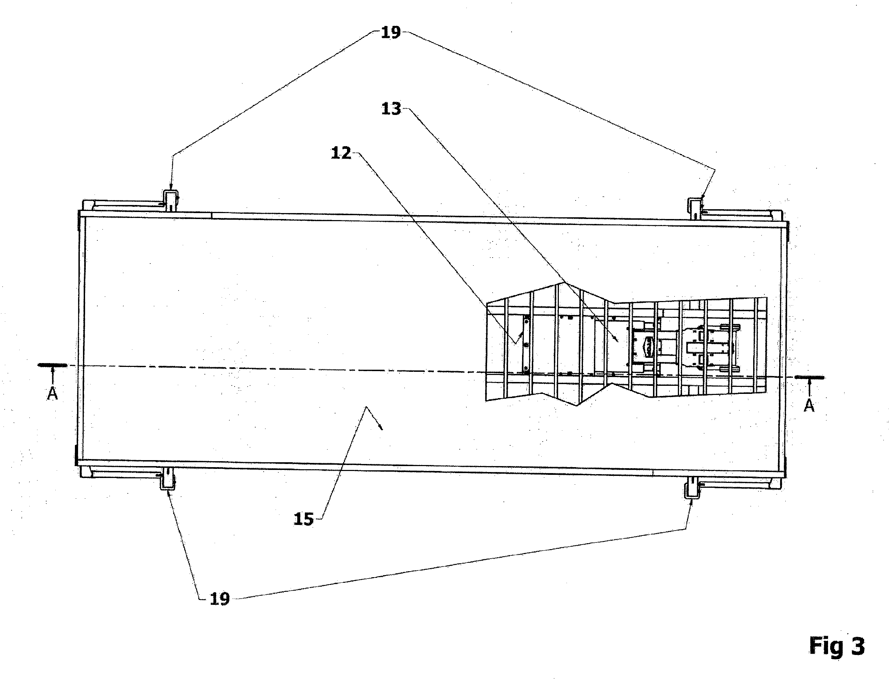

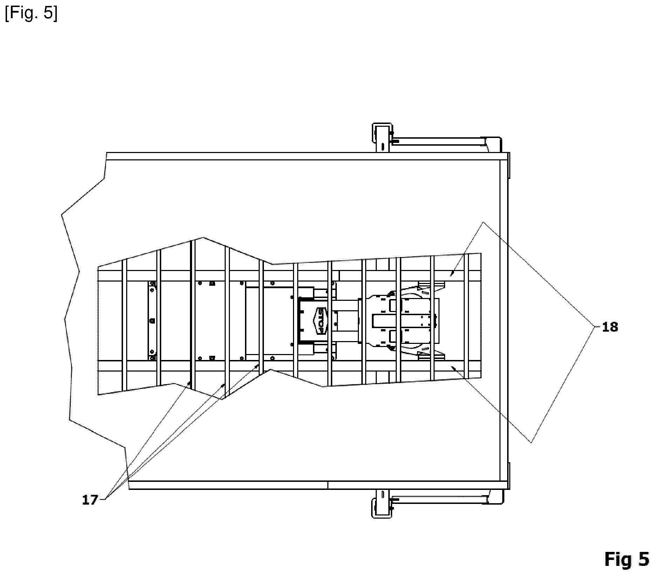

Les Fig. 3, 4, 5 présentent la tête d'immobilisation 1 montée sur un chariot 13. La tête 1 est liée au chariot 13 par des bras élévateurs 14 qui permettent de faire monter ladite tête 1, par exemple de la manière enseignée par le document EP 17000960.9 au nom de la demanderesse, jusqu'au contact avec le dessous d'une caisse mobile 15. La caisse mobile 15 représentée sur les Fig. 3 à 5 est standard et son dessous 16 présente des traverses transversales 17 régulièrement espacées.

Certains éléments de caisses mobiles sont normalisés pour permettre leur déplacement par camion et présentent deux guides sous forme de longerons longitudinaux 18. Ces guides 18 permettent un bon positionnement de des caisses mobiles 15,15.1,15.2 sur le camion.

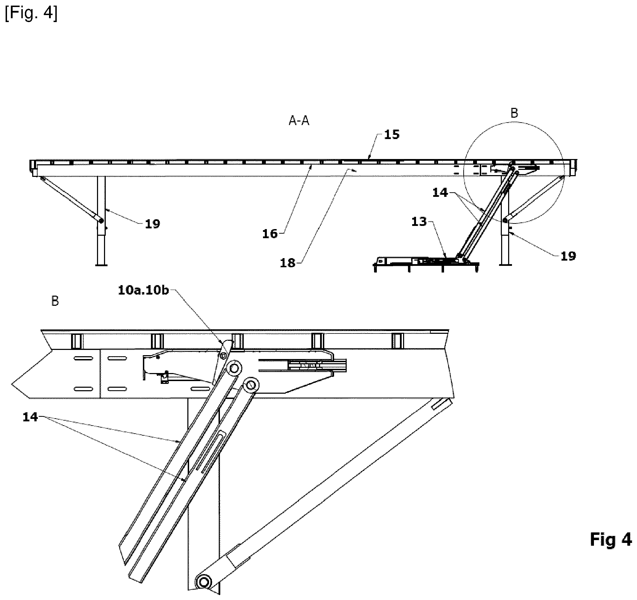

Quand les caisses mobiles 15,15.1,15.2 sont déposées, les béquilles latérales 19 sont déployées et elles reposent sur ses béquilles 19. Mais la stabilité n'est pas assurée. Pour résoudre ce problème, les taquets de blocage 10a, 10b sont sortis vers le haut et viennent accrocher une traverse transversale 17 comme illustré par le détail B de la Fig. 4.

Les bras de blocage 3a, 3b sont déployés latéralement et viennent en appui sur les guides 18 de la caisse mobile 15, via les patins 6a, 6b.

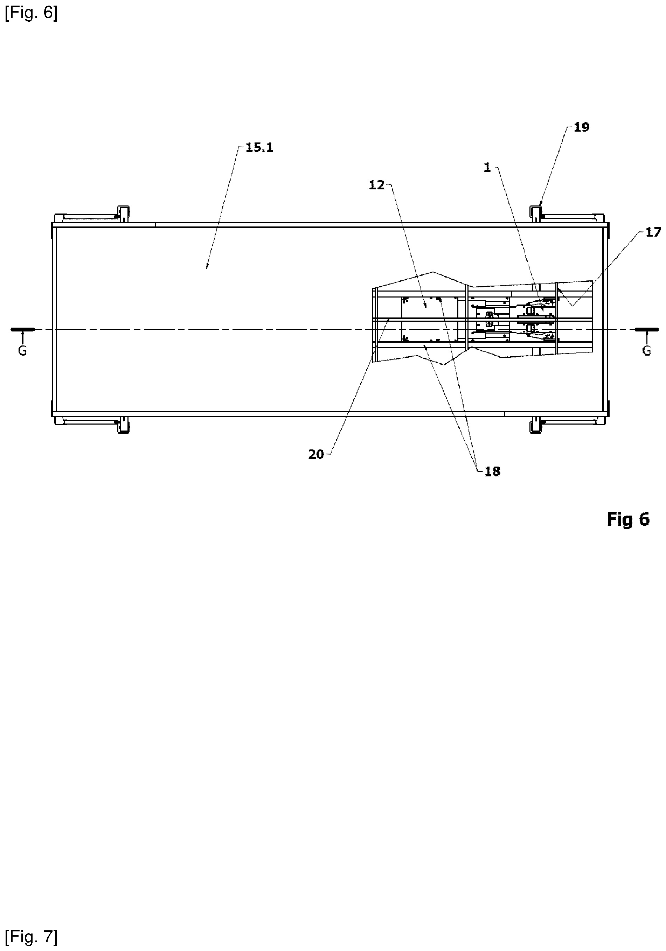

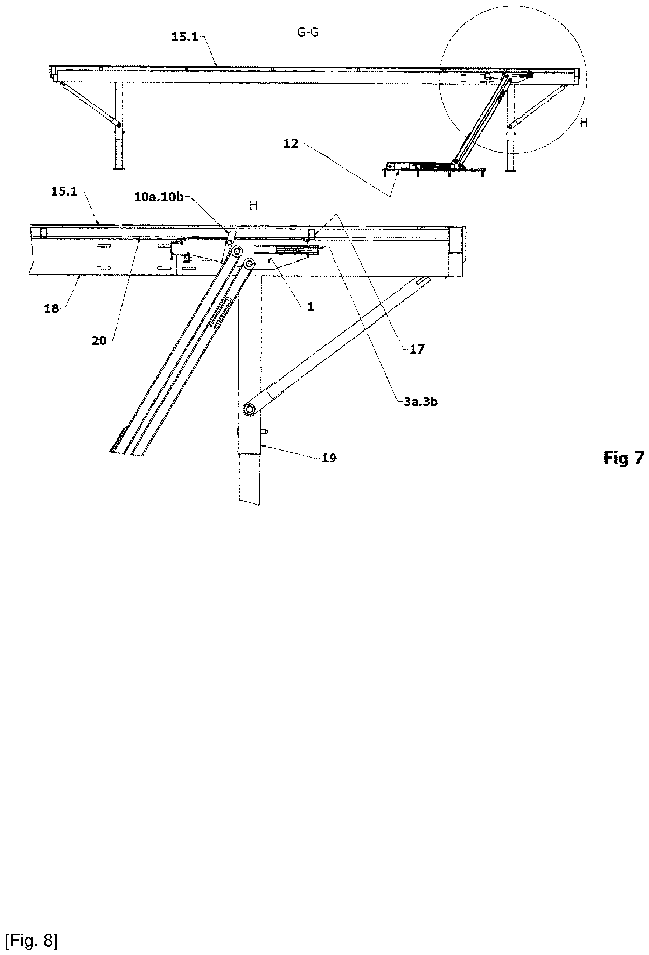

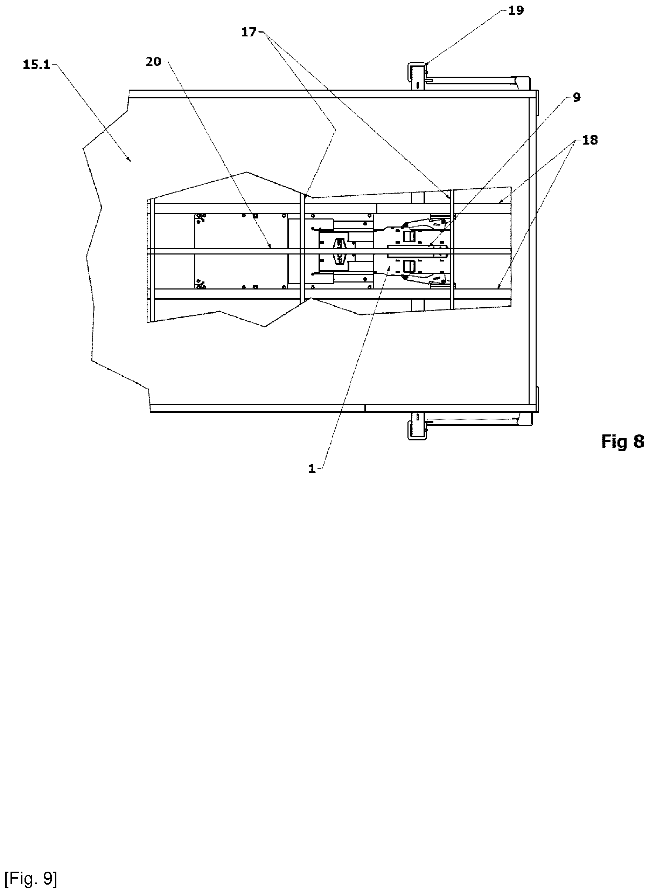

Certaines caisses mobiles 15 sont renforcées par des traverses longitudinales 20, ce qui permet d'espacer et de réduire le nombre des traverses transversales 17 comme cela est représenté sur les Fig. 6, 7 et 8 qui diffèrent des Fig. 3, 4 et 5 en ce que le nombre de traverses 17 est réduit. Sur le détail F de la Fig. 7, coupe verticale selon EE de la Fig. 6, les taquets 10a, 10b sont encore sortis vers le haut, mais n'accrochent pas de traverse transversale 17 car il n'y a plus de traverse transversale au niveau de ces taquets 10a, 10b. Les bras latéraux 3a, 3b, comme illustré Fig. 8, viennent en appui sur les guides longitudinaux 18. Les bras latéraux sont très avantageux car ils assurent la fonction anti-cabrage et aussi la fonction de blocage et de centrage de la caisse mobile 15.

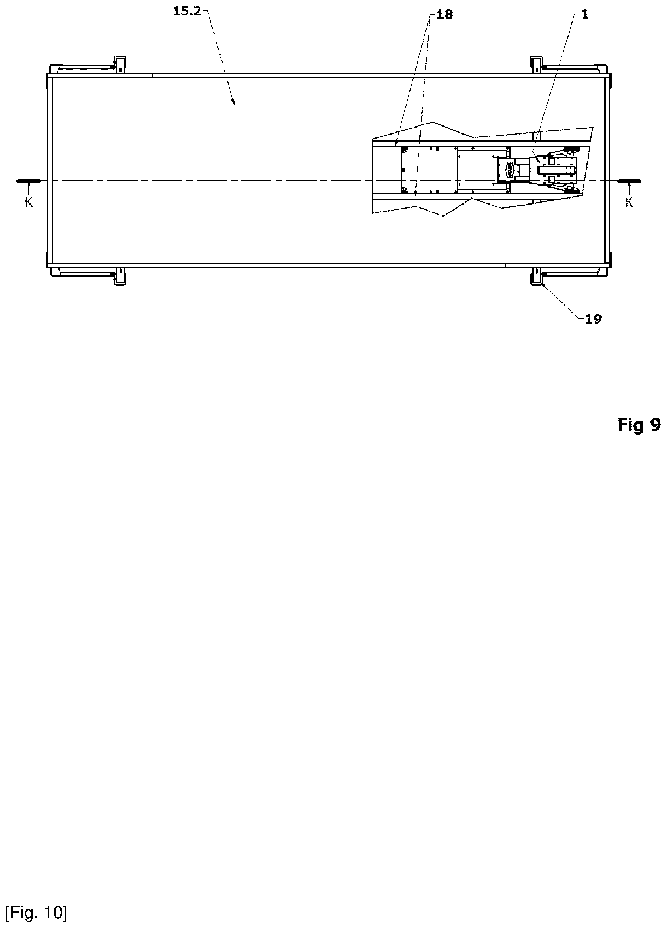

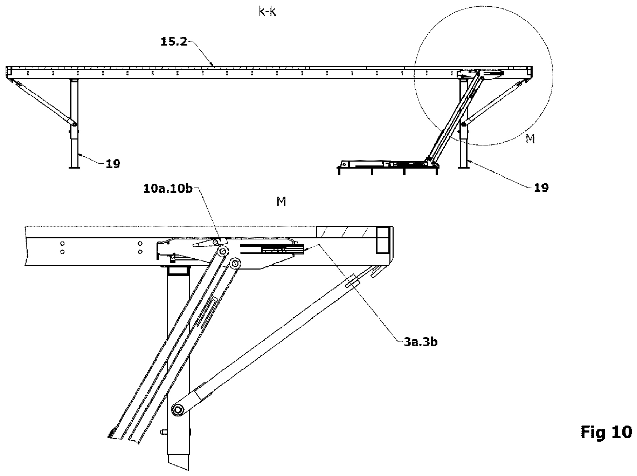

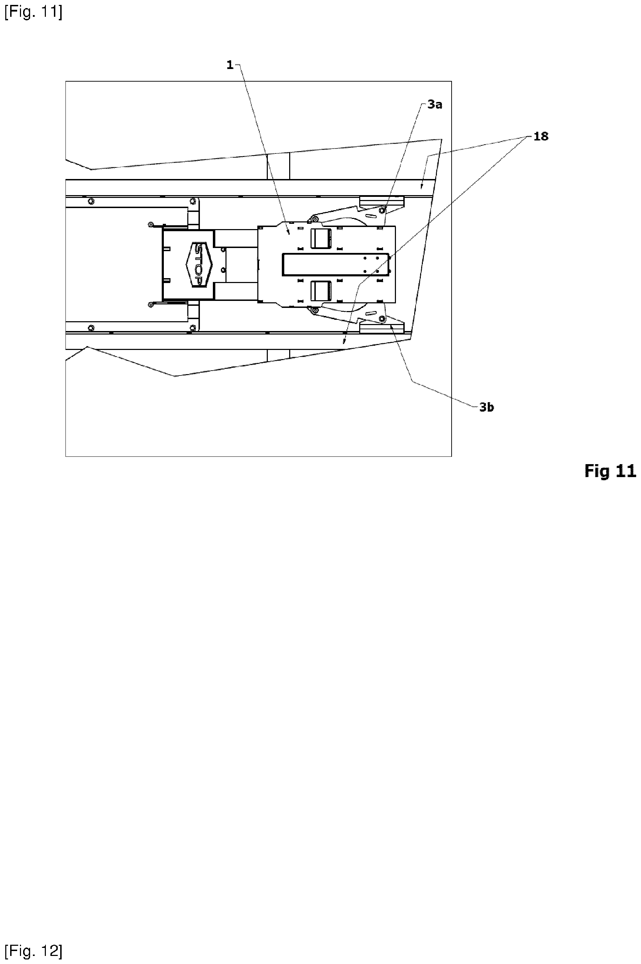

La tête 1 est une tête universelle car elle peut sécuriser tous les types connus de caisses mobiles 15. Il existe encore des caisses mobiles frigorifiques comme représenté sur les Fig. 9, 10 et 11. Ces figures diffèrent des Fig. 6, 7 et 8 en ce que ces caisses frigorifiques ont un fond en panneau sandwich isolant. Le détail M de la Fig. 10 montre que le fond présente deux faces lisses sans traverses sur le dessous et le détail L illustre que le haut de la structure 2 touche le dessous de la caisse 15. Les taquets 10a, 10b sont rétractés dans la tête et escamotés sous la caisse. De nouveau, les taquets 10a, 10b ne bloquent pas de traverses transversales qui n'existent pas. Alors, comme illustré par la Fig. 11, les bras 3a, 3b sont écartés en appui sur les guides 18 et assurent les fonctions anti-cabrage, de blocage et de centrage de la caisse 15.

Ainsi, la tête 1 est bien universelle ; avec ses bras latéraux 3a, 3b équipés de patins en matériau anti dérapant 6a, 6b, elle peut sécuriser les caisses mobiles 15,15.1,15.2 qui se présentent devant les quais quelle que soit la structure du dessous de caisse 16.

L'ossature de la caisse 15 des caisses mobiles, spécialement la base ou soubassement, est composée de traverses longitudinales 20 et transversales 17 sur lesquelles est fixé en partie supérieure le plancher de roulage pour les chariots élévateurs.

En dessous, dans certains cas (panneau sandwich isolant), ces traverses ne sont ni visibles ni accessibles seuls les guides longitudinaux 18 servent au positionnement sur la remorque qui va déplacer les caisses d'un endroit à l'autre.

La plaque de détection 9 est large car elle doit venir au contact de la traverse longitudinale centrée entre les deux guides 18. Ce contact déclenche la détection « caisse touchée ».

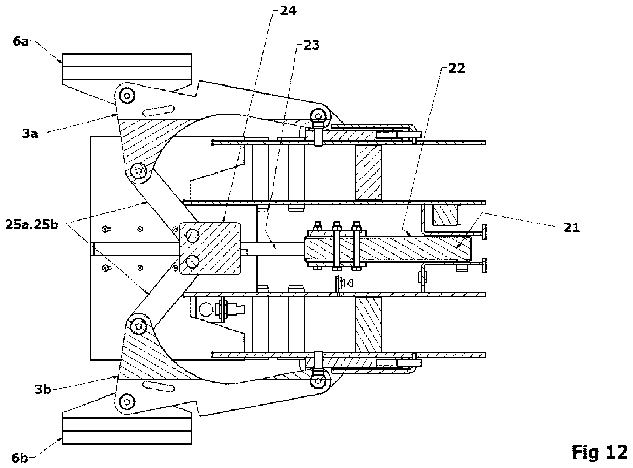

Le mécanisme qui permet une sortie symétrique des deux bras est représenté sur la Fig. 12. Cette sortie symétrique permet le centrage lors de l'appui sur les guides 18.

Un vérin hydraulique 21 est placé dans l'axe de la tête 1. Ce vérin comprend un corps 22. Une tige 23 sort du corps 22 sous l'effet de la pression du fluide hydraulique. Une tête 24 est placée à l'extrémité du piston 23. Deux biellettes 25a, 25b sont reliées par des axes de la tête 24 du vérin 21 à la partie avant intérieure des bras 3a, 3b. Ainsi, lorsque le piston 23 sort du fourreau 22, les biellettes 25a, 25b sont poussées par ledit piston et écartent les bras 3a, 3b qui sortent latéralement de la rainure 12 de la structure 2.

Les différentes étapes du procédé de blocage et déblocage de la caisse mobile 15 sont les suivantes :
Blocage de la caisse 15
Appui sur le bouton « Blocage »
Mise en retour du groupe (si détections « sol », « chariot 13 rangé » et « sécurité débéquillage » activées)
Alimentation D4 avec tempo (1 s) pour faire monter la tête 1
Avancée du chariot 13 par D2 et EV2.2 jusqu'à la détection « sécurité débéquillage »
Montée de la tête 1 par D4 jusqu'à « détection caisse 15 touchée »
Va. Avancée du chariot 13 par D2 et EV2.2 jusqu'à la détection « caisse 15 bloquée »
Vb. Ou, avancée du chariot 13
Jusqu'à une nouvelle détection, à partir du détecteur « sécurité débéquillage » situé à environ 400 mm de sortie de tige 23 de vérin 21
Sortie des bras de blocage 3a, 3b et avancée chariot par uniquement D2, jusqu'à la détection « caisse bloquée »
Puis, toujours par D2, rajouter EV2.1 pendant 1 s pour surpression sur les bras de blocage 3a, 3b
Déblocage de la caisse 15
Appui sur bouton « déblocage »
Mise en route du groupe
Recul du chariot 13 et retrait des bras de blocage 3a, 3b par uniquement D1 géré par un tempo 1 s
Descente tête 1 par D3 géré par un tempo ½ s
Recul complet du chariot 13 par uniquement D1 jusqu'à la détection « chariot 13 rangé »
Descente complète de la tête1 par D3 jusqu'à la détection « sol »

Le vérin hydraulique 21 peut être remplacé par un vérin mécanique ou pneumatique ou même par un moteur. Il peut être ajouté des moyens de verrouillage supplémentaires, ajouté des étapes dans le procédé de blocage ou de déblocage.

### Signes de référence

- 1: tête de dispositif d'immobilisation
- 2: structure en acier
- 3a: bras latéral
- 3b: bras latéral
- 4: axe de rotation
- 5: axe de rotation
- 6a: patin de blocage
- 6b: patin de blocage
- 7: support métallique
- 8: partie d'appui
- 9: plaque de détection
- 10a: taquet rétractable
- 10b: taquet rétractable
- 11a: jour pour taquet
- 11b: jour pour taquet
- 12: base
- 13: chariot
- 14: bras élévateurs du chariot
- 15: caisse mobile standard
- 15.1: caisse mobile avec peu de traverses transversales et une traverse centrale et longitudinale
- 11b: jour pour taquet
- 12: **rainure profonde**
- **12 a**: base
- 13: chariot
- 14: bras élévateurs du chariot
- 15: caisse mobile standard
- 15.1: caisse mobile avec peu de traverses transversales et une traverse centrale et longitudinale
- 15.2: caisse isolée sans traverse visibles
- 16: dessous de caisse
- 17: traverses transversales
- 18: guides longitudinaux
- 19: béquilles de caisse mobile
- 20: traverses longitudinales
- 21: vérin hydraulique
- 22: corps
- 23: tige de vérin
- 24: tête de vérin
- 25a: biellette
- 25b: biellette
- AA: coupe verticale
- B: vue de détail
- C: vue arrachée
- EE: coupe verticale
- F: vue de détail
- G: vue arrachée
- HH: coupe verticale
- K: vue arrachée
- L: vue de détail
- M: vue de détail
- I: étape de mise en retour
- Il: étape d'alimentation
- III: avancée du chariot
- IV: montée de la tête
- V: avancée du chariot jusqu'à détection « caisse bloquée »
- VI: avancée du chariot jusqu'à nouvelle détection « sécurité débéquillage »
- VII: sortie des bras de blocage et avancée chariot
- VIII: surpression sur les bras de blocage
- IX: mise en route
- X: recul du chariot et retrait des bras de blocage
- XI: descente de la tête
- XII: recul complet du chariot
- XIII: descente de la tête

## Revendications

1. Dispositif d'immobilisation et sécurisation d'une caisse mobile (15,15.1,15.2) déchargée du camion, ledit dispositif comprenant une tête, les caisses mobiles (15,15.1,15.2) étant transportées par camion présentent sur le dessous des guides (18) coopérant avec le camion, ladite tête (1) étant placée sur ledit dispositif d'immobilisation et sécurisation coulissant sous la caisse (15,15.1,15.2) et venant immobiliser celle-ci par blocage du dessous de la caisse (16), ladite tête (1) comprenant une structure métallique (2) supportant au moins un moyen de détection du dessous de la caisse (16) et des moyens de blocage de ladite caisse,
le dispositif étant **caractérisé en ce que** les moyens de blocage sont au moins deux bras latéraux (3a, 3b) s'écartant symétriquement de la structure métallique (2) jusqu'à l'appui sur les guides (18), chaque bras (3a, 3b) est équipé d'un patin d'appui anti-glissement (6a, 6b) sur le guide (18) correspondant et deux taquets de blocage (10a,10b) escamotables, pouvant se bloquer sur les traverses transversales (17).

2. Dispositif d'immobilisation et sécurisation selon la revendication précédente, **caractérisée en ce que** le moyen de détection de dessous de caisse mobile (16) comprend une plaque (9) d'au moins 90 mm de largeur afin de détecter le longeron longitudinal et central de la caisse et les traverses transversales et les panneaux isolants des caisse frigorifiques (15.2).

3. Dispositif d'immobilisation et sécurisation selon l'une des revendications précédentes, **caractérisée en ce que** les patins de blocage (6a, 6b) sont en matériau anti-dérapant.

4. Dispositif d'immobilisation selon l'une des revendications précédentes, certaines caisses mobiles (15) présentant des traverses transversales (17) sur le dessous, **caractérisée en ce que** la tête comprend des moyens de blocage supplémentaires (10a, 10b) orientés vers le haut pour le blocage de longerons transversaux inférieurs, lesdits moyens de blocage supplémentaires (10a, 10b) étant escamotables pour appui sur le dessous de caisse (16).

5. Dispositif d'immobilisation et sécurisation selon la revendication précédente, **caractérisée en ce que** les moyens de blocage orientés vers le haut sont des taquets escamotables (10a, 10b).

6. Dispositif d'immobilisation et sécurisation selon l'une des revendications précédentes, **caractérisée en ce qu'**un vérin central (21) actionne deux biellettes symétriques écartant par rotation les deux bras latéraux (3a, 3b).

7. Dispositif d'immobilisation et sécurisation selon l'une des revendications précédentes, **caractérisée en ce que** les bras latéraux (3a, 3b) s'écartant de ladite tête (1) sont situés sur le côté à l'avant de la tête.

8. Dispositif d'immobilisation et sécurisation selon l'une des revendications précédentes, **caractérisée en ce que** la structure (2) est en acier.

9. Procédé d'immobilisation et sécurisation d'une caisse mobile (15) à quai en position de chargement dans lequel est utilisé une tête de dispositif d'immobilisation et sécurisation, ledit procédé comprenant les étapes suivantes
la caisse (15) chargée sur camion est centrée par ses guides (18) ;
le camion s'approche du quai en marche arrière ;
en position de chargement de marchandises depuis le quai dans la caisse (15), le camion s'arrête ;
le personnel, typiquement le chauffeur, déploie et fixe les béquilles latérales (19) de la caisse (15) ;
le camion descend, la caisse (15) est posée sur le sol via ses béquilles (19) ;
le camion s'en va et laisse la caisse mobile (15) ;
**caractérisé en ce que** :
la tête du dispositif d'immobilisation et sécurisation est conforme à la tête du dispositif selon la revendication 1,
le dispositif d'immobilisation et sécurisation avec la tête arrive sous la caisse mobile (15) posée au sol (III) ;
la tête (1) monte jusqu'à ce qu'une plaque large et centrée (9) touche le soubassement de caisse, ce qui déclenche la détection dite « caisse touchée » (IV) ;
la caisse (15) étant dépourvue de longerons transversaux au moins partiellement, les bras latéraux sont actionnés et s'écartent de la tête jusqu'à venir appuyer et immobiliser les guides de la caisse, la caisse est immobilisée et sécurisée (VII) ;
les chariots élévateurs entrent et sortent de la caisse (15) avec les marchandises.

10. Procédé selon la revendication précédente, **caractérisé en ce que** le départ de la caisse (15,15.1,15.2) s'effectue par les opérations inverses de celles des étapes de son arrivée.

## Patentansprüche

1. Vorrichtung zum Feststellen und Sichern eines von einem LKW entladenen Wechselbehälters (15, 15.1, 15.2), umfassend einen Kopf, an dessen Unterseite mit dem LKW zusammenwirkende Wechselbehälter (15, 15.1, 15.2) Führungen (18) aufweisen mit dem LKW, wobei der Kopf (1) auf der unter dem Wechselbehälter (15, 15.1, 15.2) verschiebbaren Feststell- und Sicherungsvorrichtung aufgesetzt wird und diesen durch Blockieren der Unterseite des Wechselbehälters (16), einschließlich des Kopfes (1), festlegt eine Metallstruktur (2), die mindestens ein Mittel zur Erfassung der Unterseite des Wechselbehälters (16) und Mittel zum Blockieren des Wechselbehälters trägt, wobei die Vorrichtung **dadurch gekennzeichnet ist, dass** die Blockiermittel mindestens zwei seitliche Arme (3a, 3b) sind ) sich symmetrisch von der Metallstruktur (2) nach außen bewegen, bis sie an den Führungen (18) anliegen, wobei jeder Arm (3a, 3b) mit einem rutschfesten Kontaktpolster (6a, 6b) ausgestattet ist, das an der entsprechenden Führung (18) anliegt) und versenkbare Blockierstücke (10a,10b), die gegen die Querträger (17) blockierbar sind.

2. Wegfahr- und Sicherungsvorrichtung nach dem vorhergehenden Anspruch, **dadurch gekennzeichnet, dass** die Mittel zur Erfassung der Unterseite des Wechselbehälters (16) eine mindestens 90 mm breite Platte (9) zur Erfassung des mittleren Längsträgers des Wechselbehälters umfassen die Querträger sowie die Isolierplatten von Kühlwechselbehältern (15.2).

3. Fixier- und Sicherungsvorrichtung nach einem der vorhergehenden Ansprüche, **dadurch gekennzeichnet, dass** die Blockierpads (6a, 6b) aus einem rutschfesten Material bestehen.

4. Wegfahrsperre nach einem der vorhergehenden Ansprüche, wobei bestimmte Wechselbehälter (15) an der Unterseite Querträger (17) aufweisen, **dadurch gekennzeichnet, dass** der Kopf zusätzliche, nach oben gerichtete Blockiermittel (10a, 10b) zur Blockierung der unteren Querträger aufweist, wobei die zusätzlichen Blockiermittel (10a, 10b) einziehbar und in Position gegen die Unterseite des Wechselbehälters (16) bewegbar sind.

5. Feststell- und Sicherungsvorrichtung nach dem vorhergehenden Anspruch, **dadurch gekennzeichnet, dass** die nach oben gerichteten Sperrmittel versenkbare Anschläge (10a, 10b) sind.

6. Feststell- und Sicherungsvorrichtung nach einem der vorhergehenden Ansprüche, **dadurch gekennzeichnet, dass** ein zentraler Hydraulikzylinder (21) zwei symmetrische Pleuelstangen betätigt, die durch Drehung die beiden seitlichen Arme (3a, 3b) nach außen bewegen.

7. Fixier- und Sicherungsvorrichtung nach einem der vorhergehenden Ansprüche, **dadurch gekennzeichnet, dass** die vom Kopf (1) nach außen verlaufenden Seitenarmen (3a, 3b) seitlich an der Vorderseite des Kopfes angeordnet sind.

8. Immobilisierungs- und Sicherungsvorrichtung nach einem der vorhergehenden Ansprüche, **dadurch gekennzeichnet, dass** die Struktur (2) aus Stahl besteht.

9. Verfahren zum Fixieren und Sichern eines Wechselbehälters (15) an einer Laderampe in der Ladeposition, in der eine Fixier- und Sicherungsvorrichtung verwendet wird, wobei das Verfahren die folgenden Schritte umfasst:
der auf den LKW geladene Wechselbehälter (15) wird durch seine Führungen (18) zentriert;
der LKW fährt rückwärts bis zum Dock;
Sobald der LKW in der Position zum Laden von Gütern vom Dock in den Wechselbehälter (15) ist, stoppt er;
ein Mitarbeiter, typischerweise der Fahrer, fährt die seitlichen Stützbeine (19) des Wechselbehälters (15) aus und sichert diese;
der LKW senkt sich ab und der Wechselbehälter (15) wird auf seinen Stützbeinen (19) auf dem Boden abgestellt;
der LKW fährt weg und verlässt den Wechselbehälter (15);
**dadurch gekennzeichnet, dass**:
der Kopf der Fixierungs- und Sicherungsvorrichtung dem Kopf der Vorrichtung nach Anspruch 1 entspricht,
die Fixier- und Sicherungsvorrichtung gelangt mit dem Kopf unter den auf dem Boden stehenden Wechselbehälter (15) (III);
der Kopf (1) wird angehoben, bis eine breite, mittige Platte (9) den Wechselbehälter-Unterboden berührt, wodurch das sogenannte "Wechselbehälter berührt"-Erkennungssystem (IV) ausgelöst wird;
Da der Wechselbehälter (15) keine oder teilweise keine Querträger aufweist, werden die seitlichen Arme betätigt und bewegen sich vom Kopf nach außen, bis sie an den Führungen des Wechselbehälters anliegen und diese blockieren, und der Wechselbehälter wird fixiert und gesichert (VII);
Die Gabelstapler fahren mit der Ware in den Wechselbehälter (15) ein und aus.

10. Verfahren nach dem vorhergehenden Anspruch, **dadurch gekennzeichnet, dass** die Abfahrt des Wechselbehälters (15, 15.1, 15.2) dadurch erfolgt, dass die Schritte ausgeführt werden, die zu den bei seiner Ankunft durchgeführten Schritten entgegengesetzt sind.

## Claims

1. Device for immobilising and securing a swap body (15, 15.1, 15.2) unloaded from a truck, said device comprising a head, swap bodies (15, 15.1, 15.2) being transported by truck have on their underside guides (18) cooperating with the truck, said head (1) being placed on said immobilising and securing device sliding underneath the swap body (15, 15.1, 15.2) and immobilising it by blocking the underside of the swap body (16), said head (1) including a metal structure (2) supporting at least one means of detection of the underside of the swap body (16) and means for blocking said swap body, the device being **characterised in that** the blocking means are at least two lateral arms (3a, 3b) moving symmetrically outwards from the metal structure (2) until they abut against the guides (18), each arm (3a, 3b) being equipped with a non-slip contact pad (6a, 6b) which rests against the corresponding guide (18) and retractable blocking pieces (10a,10b), which can be blocked against the cross members (17).

2. Immobilising and securing device according to the preceding claim, **characterised in that** the means for detecting the underside of the swap body (16) comprises a plate (9) at least 90 mm wide to detect the central longitudinal member of the swap body and the cross members as well as the insulated panels of refrigerated swap bodies (15.2).

3. Immobilising and securing device according to one of the preceding claims, **characterised in that** blocking pads (6a, 6b) are made of a non-slip material.

4. Immobilising device according to one of the preceding claims, certain swap bodies (15) having cross members (17) on the underside, **characterised in that** the head includes additional blocking means (10a, 10b) oriented upwards to block the lower cross members, said additional blocking means (10a, 10b) being retractable and movable into position against the underside of the swap body (16).

5. Immobilising and securing device according to the preceding claim, **characterised in that** the blocking means oriented upwards are retractable stops (10a, 10b).

6. Immobilising and securing device according to one of the preceding claims, **characterised in that** a central hydraulic cylinder (21) actuates two symmetrical connecting rods which move the two lateral arms (3a, 3b) outwards by rotation.

7. Immobilising and securing device according to one of the preceding claims, **characterised in that** the lateral arms (3a, 3b) moving outwards from said head (1) are situated on the sides at the front of the head.

8. Immobilising and securing device according to one of the preceding claims, **characterised in that** the structure (2) is made of steel.

9. Method for immobilising and securing a swap body (15) at a loading dock in the loading position in which an immobilising and securing device is used, said method comprising the following steps:
the swap body (15) loaded on the truck is centred by its guides (18);
the truck reverses up to the dock;
once in the position for loading goods from the dock into the swap body (15), the truck stops;
an employee, typically the driver, deploys and secures the lateral support legs (19) of the swap body (15);
the truck lowers itself and the swap body (15) is placed resting on its support legs (19) on the ground;
the truck moves away and leaves the swap body (15);
**characterised in that**:
the head of immobilising and securing device conforms to the head of the device according to claim 1,
the immobilising and securing device with the head arrives underneath the swap body (15) standing on the ground (III);
the head (1) is raised until a wide, centred plate (9) touches the swap body underbody, which triggers the so-called "swap body touched" detection system (IV);
the swap body (15) being without or partially without cross members, the lateral arms are actuated and move outwards from the head until they abut against and immobilise the swap body guides, and the swap body is immobilised and secured (VII);
the fork lift trucks go in and out of the swap body (15) with the goods.

10. Method according to the preceding claim, **characterised in that** the departure of the swap body (15, 15.1, 15.2) is achieved by carrying out the opposite operations to the steps completed on its arrival. I
